# DEMANDE DE BREVET EUROPEEN

(11) **EP 4 672 527 A1**
(43) Date de publication de la demande: **31.12.2025**
(21) Numéro de dépôt: 25184662.2
(22) Date de dépôt: 23.06.2025
(51) Int. Cl.: H02G 7/02, H02G 1/02

(54) **DISPOSITIF DE SUPPORT D'UN CABLE AERIEN, SYSTEME D'UN RESEAU DE CABLES AERIENS CONFIGURE POUR GERER UN SIGNAL ELECTRIQUE COMPRENANT UN TEL DISPOSITIF DE SUPPORT, ET PROCEDE DE GESTION CORRESPONDANT**

(30) Priorité: 25.06.2024 FR 2406842
(71) Demandeur: Orange, 92130 Issy-les-Moulineaux (FR)
(72) Inventeur: LETONDEUR, Loïc, 92326 CHATILLON CEDEX (FR); GREGOIRE, Christian, 92326 CHATILLON CEDEX (FR)
(74) Mandataire: Cabinet Beau de Loménie

(57) **Abrégé**

L'invention concerne un dispositif de support d'un premier câble aérien destiné à être fixé à un poteau creux et comprenant :
- au moins un premier contrepoids destiné à être disposé à l'intérieur dudit poteau creux ;
- au moins un deuxième câble d'ajustement d'une tension mécanique du premier câble, le deuxième câble étant ancré, en sa première extrémité, au premier câble et étant fixé, en sa deuxième extrémité, au premier contrepoids.

L'invention concerne également un système d'un réseau de câbles aériens configuré pour gérer un signal électrique comprenant :
- au moins un dispositif de support selon l'invention ;
- un générateur d'un signal électrique sous l'action d'un déplacement dudit au moins un premier contrepoids dans le poteau creux causé par une variation de la tension mécanique dudit premier câble.

## Description

### Technique antérieure

La présente demande appartient au domaine général raccordement par câbles aériens notamment, mais non exclusivement, pour la mise en place de réseaux de télécommunications.

L'invention concerne plus particulièrement l'entretien des infrastructures constitutives de ces réseaux aériens tels que les poteaux et les câbles.

L'invention trouve également une application dans la valorisation des infrastructures constitutives de ces réseaux aériens.

Le raccordement par câbles aériens est une technique couramment utilisée pour la mise en place de réseaux de télécommunication ou de transport d'électricité, en suspendant des câbles au-dessus du sol. Cette méthode implique l'installation de poteaux ou pylônes, la pose de câbles tendus, et, éventuellement, des dispositifs d'isolation et de protection contre les intempéries. Des boîtes de jonction et de distribution facilitent les connexions et la distribution des services. Bien que cette approche présente des avantages notables telle que, notamment, une facilité d'accès pour la maintenance, elle comporte également des inconvénients.

Ainsi, l'un de ces inconvénients concerne la gestion de la tension mécanique des câbles. En effet, cette dernière doit être suffisante pour que le câble reste à une distance suffisante du sol mais elle ne doit également pas dépasser une certaine valeur au-delà de laquelle il existe un risque d'arrachage des liens au moyen desquels le câble est suspendu sur les poteaux ou encore un risque de rupture du câble. De tels liens peuvent être des moyens de suspension du câble.

La plage de valeurs que peut prendre la tension mécanique d'un câble est déterminée avant la pose de ce dernier en fonction, entre autres, de données relatives aux poteaux auxquels le câble est destiné à être suspendu telles que la distance séparant deux poteaux consécutifs, leur altitude, et de données météorologiques telles que la force et la direction des vents dans la zone où se situe la section de câble considérée, ou encore les variations de température entre l'été et l'hiver.

Malgré ces précautions prises lors de l'installation des câbles, il existe toujours un risque d'usure prématurée des câbles aériens.

Il existe par conséquent un besoin d'une solution permettant de réduire ce risque et ainsi allonger la durée de vie des câbles et des poteaux.

### Exposé de l'invention

La présente invention a pour objectif de remédier à tout ou partie des inconvénients de l'art antérieur, notamment ceux exposés ci-avant, en proposant une solution qui permette de ralentir le vieillissement des câbles tout en réduisant les risques de rupture des câbles.

A cet effet, et selon un premier aspect, l'invention concerne un dispositif de support d'un premier câble aérien destiné à être fixé à un poteau creux et comprenant :
- au moins un premier contrepoids destiné à être disposé à l'intérieur dudit poteau creux ;
- au moins un deuxième câble d'ajustement d'une tension mécanique du premier câble, le deuxième câble étant ancré, en sa première extrémité, au premier câble et étant fixé, en sa deuxième extrémité, au premier contrepoids.

Un tel dispositif de support permet d'ajuster dynamiquement la tension mécanique du premier câble grâce à l'utilisation d'un contrepoids se déplaçant à l'intérieur du poteau. Ce dispositif peut être utilisé aussi bien pour un réseau de distribution d'électricité que pour un réseau de télécommunications reposant sur l'utilisation de câbles en cuivre ou en fibre optique.

En ajustant dynamiquement la tension dans le câble par l'entremise du contrepoids, il est possible de compenser les variations de la tension mécanique, évitant ainsi le relâchement du câble ou sa rupture. Un tel ajustement contribue à maintenir constante la valeur de la tension mécanique du câble, réduisant ainsi son usure.

Ce dispositif de support présente l'avantage de nécessiter peu d'espace au niveau des poteaux pour disposer ces contrepoids puisque ceux-ci sont situés à l'intérieur de ces derniers dans leur partie creuse. Une telle configuration permet également de se passer de moyens de sécurisation de ces contrepoids. En effet, si les contrepoids étaient suspendus à l'extérieur des poteaux comme cela est le cas pour les caténaires des chemins de fer, leur balancement pourrait entrainer une oscillation des poteaux qui à terme endommagerait la structure de ces derniers.

Ainsi, cette solution permet de réduire les risques de dégradation et/ou de rupture des câbles sans ajouter de risque sécuritaire pour les usagers ou le matériel. Enfin, en évitant les relâchements et les ruptures de câble, l'utilisation d'un contrepoids diminue la fréquence des interventions de maintenance et des réparations, réduisant ainsi les coûts d'entretien des infrastructures.

Dans des modes particuliers de mise en œuvre, le dispositif de support comporte un au moins un premier dit premier lien comprend au moins une première poulie dans une jante de laquelle ledit deuxième câble est destiné à être positionné.

L'utilisation de cette poulie permet de réduire les risques d'usure du deuxième câble.

Dans des modes particuliers de mise en œuvre, le dispositif de support comprend en outre :
- au moins un deuxième contrepoids destiné à être disposé à l'intérieur dudit poteau creux ;
- au moins un troisième câble d'ajustement d'une tension mécanique du premier câble, le troisième câble étant ancré, en sa première extrémité, au premier câble et étant fixé, en sa deuxième extrémité, au deuxième contrepoids.

Dans des modes particuliers de mise en œuvre, le dispositif de support comporte un deuxième lien apte à suspendre le troisième câble au poteau creux.

Dans des modes particuliers de mise en œuvre, le deuxième lien comprend au moins une deuxième poulie dans une jante de laquelle ledit troisième câble est destiné à être positionné.

L'utilisation de cette poulie permet de réduire les risques d'usure du troisième câble et par voie de conséquence les risques d'usures du premier câble dans les deux directions autour du poteau.

Dans des modes particuliers de mise en œuvre, le premier contrepoids et le deuxième contrepoids ont une masse distincte.

Selon un deuxième aspect, l'invention concerne un système d'un réseau de câbles aériens configuré pour gérer un signal électrique comprenant :
- au moins un dispositif de support selon l'invention ;
- un générateur d'un signal électrique sous l'action d'un déplacement dudit au moins un premier contrepoids dans le poteau creux causé par une variation de la tension mécanique dudit premier câble.

Le système selon l'invention permet de valoriser l'énergie dissipée par les variations de la tension mécanique du premier câble en plus de permettre d'ajuster dynamiquement cette dernière grâce à l'utilisation d'un contrepoids se déplaçant à l'intérieur du poteau. Ce système peut être utilisé aussi bien pour un réseau de distribution d'électricité que pour un réseau de télécommunications reposant sur l'utilisation de câbles en cuivre ou en fibre optique.

La solution objet de l'invention permet avantageusement d'utiliser le mouvement du contrepoids généré par une variation de la valeur de la tension mécanique du câble pour générer un signal électrique qui pourra être utilisé à divers fins telles que, par exemple, l'alimentation de capteurs ou de dispositifs d'éclairage, la supervision des variations de la tension mécanique du câble, etc. L'énergie du signal électrique ainsi généré pourra également être stocké dans une batterie.

Dans des modes particuliers de mise en œuvre,
- ledit au moins un contrepoids comprend un noyau en matériau magnétique ; et
- le générateur d'un signal électrique comprend au moins une bobine d'inductance, disposée dans le poteau creux, au travers de laquelle ledit au moins un contrepoids est destiné à se déplacer.

Dans des modes particuliers de mise en œuvre,
- ledit au moins un contrepoids comprend au moins une bobine d'inductance ; et
- le générateur d'un signal électrique comprend au moins une portion en matériau magnétique disposée, dans le poteau creux, devant laquelle ledit au moins un contrepoids est destiné à se déplacer.

Ces deux implémentations présentent de nombreux avantages, notamment en termes de simplicité, d'efficacité énergétique, de coût, de maintenance ainsi que fiabilité et de sécurité.

En effet, ces générateurs sont durables et peuvent fonctionner de manière fiable pendant de longues périodes avec un entretien minimal. De plus, le mouvement mécanique est directement converti en électricité, ce qui offre une grande efficacité lorsque les pertes par frottement et/ou résistance sont minimisées.

Dans des modes particuliers de mise en œuvre, le générateur d'un signal électrique comprend un convertisseur de contraintes mécaniques en signal électrique disposé dans le poteau creux ;
le déplacement dudit au moins un contrepoids dans le poteau creux appliquant une contrainte mécanique audit convertisseur.

Dans des modes particuliers de mise en œuvre,
- le générateur d'un signal électrique comprend un matériau piézoélectrique disposé dans le poteau creux ;
- le déplacement dudit au moins un contrepoids dans le poteau creux appliquant une contrainte mécanique au sein dudit matériau piézoélectrique.

Générer un signal électrique au moyen d'un dispositif piézoélectrique se révèle être particulièrement avantageux dans des contextes présentant des contraintes d'espace comme cela est le cas au sein d'un poteau creux. En effet, les dispositifs piézoélectriques sont généralement très compacts et légers.

De plus, les matériaux piézoélectriques constitutifs de ces dispositifs de génération d'un signal électrique convertissent directement l'énergie mécanique en énergie électrique sans nécessiter de composants intermédiaires complexes. Cette conversion directe est particulièrement efficace pour récupérer l'énergie à partir de vibrations, de pressions, ou d'autres déformations mécaniques même faibles.

Dans des modes particuliers de mise en œuvre, le système comprend en outre au moins un accumulateur d'une énergie dudit signal électrique généré.

Dans des modes particuliers de mise en œuvre, le système comprend en outre au moins une alimentation électrique apte à fournir un signal électrique parmi les suivants :
- un signal électrique généré fourni par le générateur ;
- un signal électrique fourni par l'accumulateur.

Selon un troisième aspect, l'invention concerne un procédé de gestion d'un signal électrique mis en œuvre par un système selon l'invention comprenant :
- la génération d'un signal électrique sous l'action d'un déplacement dudit au moins un premier contrepoids dans le poteau creux causé par une variation de la tension mécanique dudit premier câble.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 est une représentation schématique d'un réseau de câbles aériens dans lequel l'invention est mise en œuvre;
[Fig. 2A] la figure 2A représente un poteau découpé selon le plan de coupe I-I introduit en référence à la figure 1 selon un premier mode de réalisation de l'invention ;
[Fig. 2B] la figure 2B représente un poteau découpé selon le plan de coupe II-II introduit en référence à la figure 1 selon le premier mode de réalisation de l'invention ;
[Fig. 3] la figure 3 représente un poteau découpé selon le plan de coupe I-I introduit en référence à la figure 1 selon un deuxième mode de réalisation de l'invention ;
[Fig. 4A] la figure 4A représente un système de gestion d'un signal électrique selon un premier mode de réalisation de l'invention ;
[Fig. 4B] la figure 4B représente un système de gestion d'un signal électrique selon un deuxième mode de réalisation de l'invention ;
[Fig. 4C] la figure 4C représente un système de gestion d'un signal électrique selon un troisième mode de réalisation de l'invention.

### Description de modes de réalisation

La présente invention vise à ralentir le vieillissement des câbles tout en réduisant les risques de rupture des câbles.

La présente invention vise également, dans un deuxième temps, à assurer une autonomie énergétique sans introduire de nouvelles contraintes mécaniques au niveau des poteaux auxquels sont suspendus de câbles aériens, lesquelles pourraient conduire à un vieillissement accéléré ou à une rupture de ces câbles.

Cette autonomie énergétique permet, par exemple, d'alimenter des capteurs disposés au niveau des poteaux et dont la fonction est de collecter des informations sur le comportement mécanique de ces poteaux ou du câble qui y est fixé. Ces informations facilitent la surveillance et la maintenance de ces infrastructures puisqu'en contribuant notamment à la détermination d'un niveau de fatigue mécanique du câble et/ou des poteaux elles permettent de planifier des opérations de maintenance.

Cette autonomie énergétique rend également possible l'alimentation en énergie électrique d'autres dispositifs tels que des dispositifs d'éclairage publique, etc.

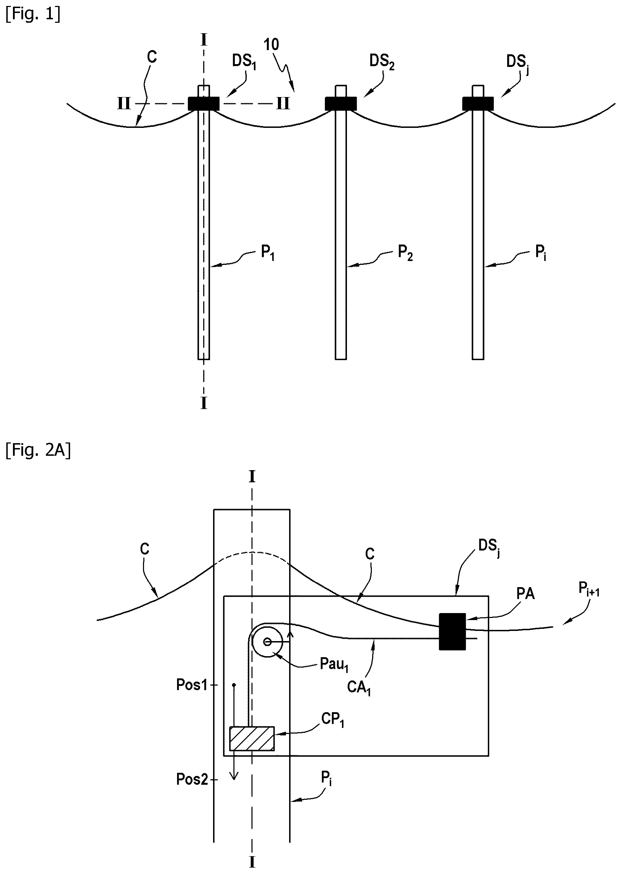

La **figure 1** est une représentation schématique d'un réseau de câbles aériens 1 dans lequel l'invention peut être mise en œuvre. Bien que décrite en référence à un réseau de télécommunications, la présente invention trouve également une application dans les réseaux de transport d'électricité aériens.

Un tel réseau de câbles aériens 1 comprend N poteaux Pᵢ avec i ∈ {1; ... ; N}. Les poteaux Pᵢ sont des poteaux creux réalisés en matériaux composites tels que par exemple de la fibre de verre. Ces poteaux Pᵢ en matériau composite sont plus légers que les classiques poteaux en bois, ils sont également plus faciles à installer et moins coûteux que ces derniers.

Malgré leur faible poids, les poteaux Pᵢ montrent une grande résistance à tous types de charges. En outre, ils sont considérés comme des éléments de sécurité passive car, en cas de collision avec un véhicule, ils s'effondrent sans mettre en danger la vie des passagers.

Un câble C est fixé aux poteaux Pᵢ au moyen de liens DSⱼ, avec j ∈ {1; ... ; M} où M est supérieur ou égale à N, un même poteau Pᵢ pouvant comporter plusieurs liens DSⱼ. Ces liens, appelés dans la suite du document dispositifs de support, DSⱼ seront discutés plus en détail dans la suite du présent document.

Un tel câble C peut aussi bien être un câble destiné au transport d'électricité qu'un câble destinés au transport de signaux de télécommunications tels que des câbles en cuivre ou en fibre optique.

On a également représenté sur cette figure 1 un premier plan de coupe I-I parallèle au poteau Pᵢ et un deuxième plan de coupe II-II perpendiculaire au premier plan de coupe.

La **figure 2A** représente un poteau Pᵢ découpé selon le plan de coupe I-I introduit en référence à la figure 1 selon un premier mode de réalisation de l'invention. Sur cette figure, le lien au moyen duquel le câble C est suspendu au poteau Pᵢ n'est pas représenté afin de ne pas surcharger la figure.

Sur cette figure 2A, on peut voir en gros plan et en coupe la partie haute du poteau Pᵢ sur laquelle est fixé un dispositif de support DSⱼ représenté schématiquement par un rectangle.

Le dispositif de support DSⱼ comprend une poulie Pou₁ fixée sur une surface interne du poteau Pᵢ dans la jante de laquelle un câble CA₁ d'ajustement d'une tension mécanique du câble C est positionné. Une première extrémité du câble CA₁ est ancré au câble C par l'intermédiaire d'une pince d'ancrage PA alors qu'une deuxième extrémité du câble CA₁ est fixé à un contrepoids CP₁ situé à l'intérieur du poteau Pᵢ.

Ainsi lorsque la tension mécanique du câble C varie, cette variation est transmise au câble CA₁ auquel il est ancré. Cette variation de la tension mécanique du câble C provoque, par l'intermédiaire du câble CA₁ et de la poulie Pou₁ dans laquelle il est positionné, un mouvement du contrepoids CP₁ qui oscille verticalement entre une première position Pos1 et une deuxième position Pos2. L'amplitude de ce mouvement d'oscillation est fonction de la valeur de la variation de la tension mécanique du câble C.

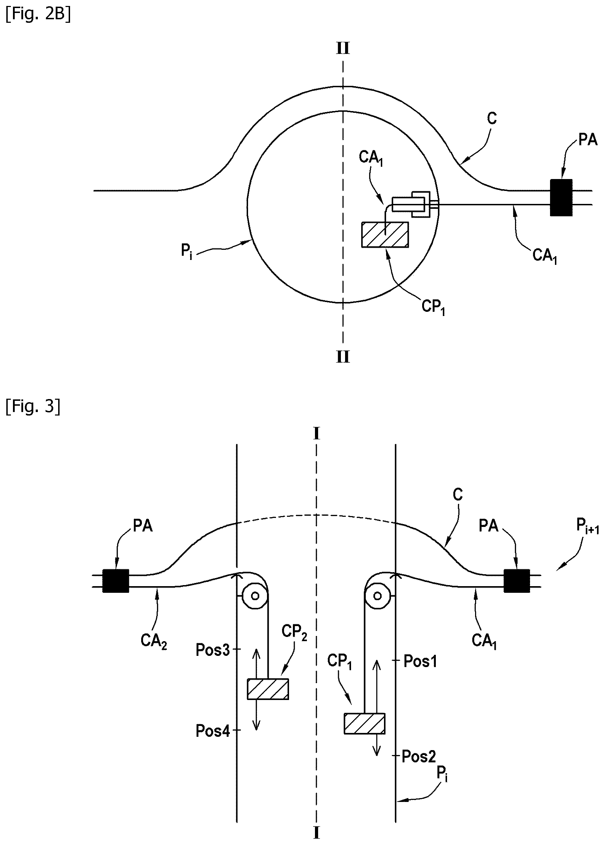

La **figure 2B****,** quant à elle, représente le poteau Pᵢ découpé selon le plan de coupe II-II introduit en référence à la figure 1 selon le premier mode de réalisation de l'invention.

Sur cette figure 2B, on peut voir la poulie Pou₁ fixée sur la surface intérieure du poteau Pᵢ et le câble CA₁ positionné dans la jante de cette dernière. La poulie Pou1 surplombe le contrepoids CP₁ fixé à la deuxième extrémité du câble CA₁ et disposé à l'intérieur du poteau Pᵢ. le câble C, quant à lui, contourne l'extérieur du poteau Pᵢ.

La **figure 3** représente un poteau Pᵢ découpé selon le plan de coupe I-I introduit en référence à la figure 1 selon un deuxième mode de réalisation de l'invention.

Sur cette figure 3, on peut voir en gros plan et en coupe la partie haute du poteau Pᵢ sur laquelle sont fixés deux dispositifs de support DSⱼ et DSⱼ₊₁ représentés schématiquement par un rectangle.

Le premier dispositif de support DSⱼ comprend une poulie Pou₁ fixée sur une surface interne du poteau Pᵢ dans la jante de laquelle un câble CA₁ d'ajustement d'une tension mécanique du câble C est positionné. Une première extrémité du câble CA₁ est ancré au câble C par l'intermédiaire d'une pince d'ancrage PA alors qu'une deuxième extrémité du câble CA₁ est fixé à un contrepoids CP₁ situé à l'intérieur du poteau Pᵢ.

Le deuxième dispositif de support DSⱼ₊₁ comprend une poulie Pou₂ fixée sur une surface interne du poteau Pᵢ dans la jante de laquelle un câble CA₂ d'ajustement d'une tension mécanique du câble C est positionné. Une première extrémité du câble CA₂ est ancré au câble C par l'intermédiaire d'une pince d'ancrage PA alors qu'une deuxième extrémité du câble CA₂ est fixé à un contrepoids CP₂ situé à l'intérieur du poteau Pᵢ.

Ainsi lorsque la tension mécanique du câble C varie, cette variation est transmise au câble CA₁ et au câble CA₂ auxquels il est ancré. Cette variation de la tension mécanique du câble C provoque, par l'intermédiaire du câble CA₁ et de la poulie Pou₁ dans laquelle il est positionné, un mouvement du contrepoids CP₁ qui oscille verticalement entre une première position Pos1 et une deuxième position Pos2. L'amplitude de ce mouvement d'oscillation est fonction de la valeur de la variation de la tension mécanique du câble C.

De la même manière, cette variation de la tension mécanique du câble C provoque, par l'intermédiaire du câble CA₂ et de la poulie Pou₂ dans laquelle il est positionné, un mouvement du contrepoids CP₂ qui oscille verticalement entre une première position Pos3 et une deuxième position Pos3, qui peuvent être identiques ou pas aux positions Pos1 et Pos2 associées au premier contrepoids CP₁. L'amplitude de ce mouvement d'oscillation est fonction de la valeur de la variation de la tension mécanique du câble C.

Dans ce deuxième mode de réalisation, les deux contrepoids CP₁ et CP₂ peuvent avoir une masse identique ou une masse différente. La valeur de la masse de chacun des contrepoids CP₁ et CP₂ dépend de la section la valeur de la tension mécanique de la section de câble C à laquelle le câble CA₁ et le câble CA₂ sont respectivement ancrés. En effet, deux sections d'un même câble C peuvent avoir des contraintes mécaniques différentes qui influent sur la valeur de la tension mécanique calculée préalablement à l'installation du câble C.

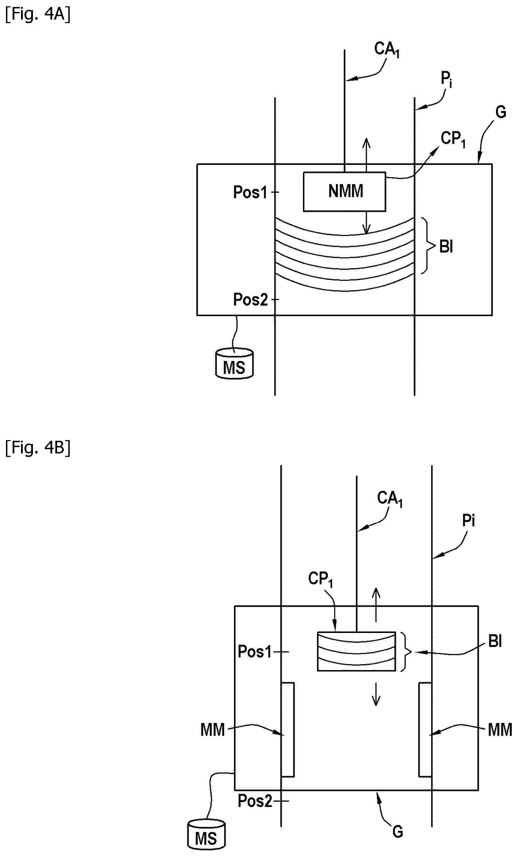

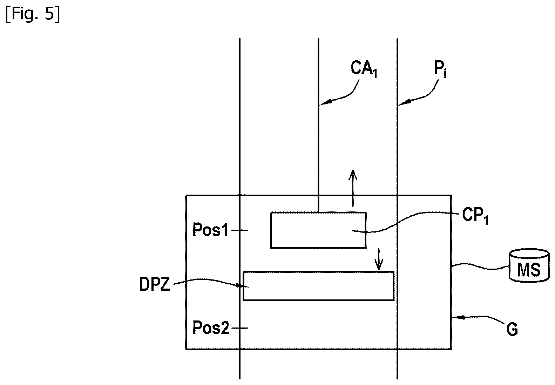

La **figure 4A** représente un système de gestion d'un signal électrique selon un premier mode de réalisation de l'invention.

Sur cette figure 4A, on peut voir en gros plan et en coupe la partie basse du poteau Pᵢ, à l'intérieur duquel un contrepoids CP₁ est suspendu, découpé selon le plan de coupe I-I introduit en référence à la figure 1 ainsi qu'un générateur G d'un signal électrique représenté schématiquement par un rectangle. Dans ce premier mode de réalisation, le générateur G est un générateur par induction reposant sur l'utilisation d'une bobine à inductance et d'un noyau en matériau magnétique.

Dans ce premier mode de réalisation, une bobine d'inductance BI est disposée à l'intérieur du poteau Pᵢ contre la paroi entre les positions Pos1 et Pos2 entre lesquelles le contrepoids CP₁ se déplace lorsqu'une variation de la tension mécanique du câble C se produit. Afin de générer un signal électrique par induction, le contrepoids CP₁ comprend, quant à lui, un noyau en matériau magnétique NMM. Ainsi, le déplacement du contrepoids CP₁ au travers de la bobine d'inductance BI génère un signal électrique.

Dans une variante d'implémentation, le système comprend un deuxième contrepoids CP₂ lui aussi comprenant un noyau en matériau magnétique NMM. Dans cette implémentation, la bobine à inductance BI est disposée à l'intérieur du poteau Pᵢ contre la paroi à la fois entre les positions Pos1 et Pos2 et entre les positions Pos3 et Pos4 entre lesquelles le contrepoids CP₂ se déplace lorsqu'une variation de la tension mécanique du câble C se produit. Ainsi, les deux contrepoids contribuent à générer un signal électrique.

La **figure 4B** représente un système de gestion d'un signal électrique selon un deuxième mode de réalisation de l'invention.

Sur cette figure 4B, on peut voir en gros plan et en coupe la partie basse du poteau Pᵢ, à l'intérieur duquel un contrepoids CP₁ est suspendu, découpé selon le plan de coupe I-I introduit en référence à la figure 1 ainsi qu'un générateur G d'un signal électrique représenté schématiquement par un rectangle. Dans ce deuxième mode de réalisation, le générateur G est un générateur par induction reposant sur l'utilisation d'une bobine à inductance et d'un noyau en matériau magnétique.

Dans ce deuxième mode de réalisation, un matériau magnétique MM est disposé à l'intérieur du poteau Pᵢ contre la paroi entre les positions Pos1 et Pos2 entre lesquelles le contrepoids CP₁ se déplace lorsqu'une variation de la tension mécanique du câble C se produit. Afin de générer un signal électrique par induction, le contrepoids CP₁ comprend, quant à lui, une bobine d'inductance BI. Ainsi, le déplacement du contrepoids CP₁ au travers du matériau magnétique MM génère un signal électrique.

Dans une variante d'implémentation, le système comprend un deuxième contrepoids CP₂ lui aussi comprenant une bobine d'inductance BI. Dans cette implémentation, le matériau magnétique MM est disposé à l'intérieur du poteau Pᵢ contre la paroi à la fois entre les positions Pos1 et Pos2 et entre les positions Pos3 et Pos4 entre lesquelles le contrepoids CP₂ se déplace lorsqu'une variation de la tension mécanique du câble C se produit. Ainsi, les deux contrepoids contribuent à générer un signal électrique.

La **figure 4C** représente un système de gestion d'un signal électrique selon un troisième mode de réalisation de l'invention.

Sur cette figure 4C, on peut voir en gros plan et en coupe la partie basse du poteau Pᵢ, à l'intérieur duquel un contrepoids CP₁ est suspendu, découpé selon le plan de coupe I-I introduit en référence à la figure 1 ainsi qu'un générateur G d'un signal électrique représenté schématiquement par un rectangle. Dans ce troisième mode de réalisation, le générateur utilise le principe de conversion d'une contrainte mécanique en un signal électrique, tel que le principe de la piézoélectricité, pour générer un signal électrique.

Dans ce troisième mode de réalisation, un disque en matériau piézoélectrique DPZ est disposé à l'intérieur du poteau Pᵢ au plus bas à la position Pos2 jusqu'à laquelle le contrepoids CP₁ se déplace lorsqu'une variation de la tension mécanique du câble C se produit.

En effet, afin de générer un signal électrique, le contrepoids CP₁ doit exercer une pression suffisante sur le matériau piézoélectrique constitutif du disque piézoélectrique DPZ. Pour cela, le disque piézoélectrique DPZ soit disposé au-dessus de la position Pos2 représentant une position extrémale basse du contrepoids CP₁ dans le poteau Pᵢ.

Dans une variante d'implémentation, le système comprend un deuxième contrepoids CP₂ lui. Dans cette implémentation, le disque piézoélectrique DPZ est disposé à l'intérieur du poteau Pᵢ à une position Pos qui permette à la fois au contrepoids CP₁ et au contrepoids CP₂ d'exercer une pression suffisante sur le matériau piézoélectrique constitutif du disque piézoélectrique DPZ.

Ainsi cette position Pos se situe au-dessus de celles des deux positions Pos2 ou Pos4 qui est la plus proche du sommet du poteau Pᵢ, garantissant ainsi que chacun des deux contrepoids CP₁ et CP₂ exercent une pression suffisante sur le disque piézoélectrique DPZ pour générer un signal électrique.

Ce troisième mode de réalisation peut être mis en œuvre conjointement avec le premier ou le deuxième mode de réalisation du système de gestion.

Dans des variantes d'implémentation, le générateur G est raccordé électriquement à des moyens de stockage d'énergie électrique MS représentés sur les figures 4A à 4C. De tels moyens de stockage d'énergie électrique MS peuvent prendre la forme d'un accumulateur.

Enfin, dans des variantes d'implémentation, le système de gestion d'un signal électrique comprend une alimentation électrique (non représentée sur les figures) apte à fournir un signal électrique à destination d'équipements situés à proximité du poteau Pᵢ. Le signal électrique fourni par cette alimentation peut être le signal électrique directement généré par le générateur G ou encore un signal électrique fourni par les moyens de stockage MS.

Le signal électrique ainsi délivré peut alors alimenter des capteurs destinés à monitorer la tension mécanique du câble C, des moyens d'éclairage publique, etc.

## Revendications

1. Dispositif de support d'un premier câble aérien destiné à être fixé à un poteau creux et comprenant :
- au moins un premier contrepoids destiné à être disposé à l'intérieur dudit poteau creux ;
- au moins un deuxième câble d'ajustement d'une tension mécanique du premier câble, le deuxième câble étant ancré, en sa première extrémité, au premier câble et étant fixé, en sa deuxième extrémité, au premier contrepoids.

2. Dispositif de support selon la revendication 1 dans lequel le dispositif de support comporte un au moins un premier dit premier lien comprend au moins une première poulie dans une jante de laquelle ledit deuxième câble est destiné à être positionné.

3. Dispositif de support selon l'une quelconque des revendications 1 à 2 comprenant en outre :
- au moins un deuxième contrepoids destiné à être disposé à l'intérieur dudit poteau creux ;
- au moins un troisième câble d'ajustement d'une tension mécanique du premier câble, le troisième câble étant ancré, en sa première extrémité, au premier câble et étant fixé, en sa deuxième extrémité, au deuxième contrepoids.

4. Dispositif de support selon la revendication 3 dans lequel le dispositif de support comporte un deuxième lien apte à suspendre le troisième câble au poteau creux.

5. Dispositif de support selon la revendication 4 dans lequel le deuxième lien comprend au moins une deuxième poulie dans une jante de laquelle ledit troisième câble est destiné à être positionné.

6. Dispositif de support selon l'une quelconque des revendications 3 à 4 dans lequel le premier contrepoids et le deuxième contrepoids ont une masse distincte.

7. Système d'un réseau de câbles aériens configuré pour gérer un signal électrique comprenant :
- au moins un dispositif de support selon l'une quelconque des revendications 1 à 6 ;
- un générateur d'un signal électrique sous l'action d'un déplacement dudit au moins un premier contrepoids dans le poteau creux causé par une variation de la tension mécanique dudit premier câble.

8. Système d'un réseau de câbles aériens selon la revendication 7 dans lequel :
- ledit au moins un contrepoids comprend un noyau en matériau magnétique ; et
- le générateur d'un signal électrique comprend au moins une bobine d'inductance, disposée dans le poteau creux, au travers de laquelle ledit au moins un contrepoids est destiné à se déplacer.

9. Système d'un réseau de câbles aériens selon la revendication 7 dans lequel :
- ledit au moins un contrepoids comprend au moins une bobine d'inductance ; et
- le générateur d'un signal électrique comprend au moins une portion en matériau magnétique disposée, dans le poteau creux, devant laquelle ledit au moins un contrepoids est destiné à se déplacer.

10. Système d'un réseau de câbles aériens selon l'une quelconque des revendications 7 dans lequel :
- le générateur d'un signal électrique comprend un convertisseur de contraintes mécaniques en signal électrique disposé dans le poteau creux ;
le déplacement dudit au moins un contrepoids dans le poteau creux appliquant une contrainte mécanique audit convertisseur.

11. Système d'un réseau de câbles aériens selon l'une quelconque des revendications 7 ou 10 dans lequel :
- le générateur d'un signal électrique comprend un matériau piézoélectrique disposé dans le poteau creux ;
le déplacement dudit au moins un contrepoids dans le poteau creux appliquant une contrainte mécanique au sein dudit matériau piézoélectrique.

12. Système d'un réseau de câbles aériens selon l'une quelconque des revendications 7 à 11 comprenant en outre au moins un accumulateur d'une énergie dudit signal électrique généré.

13. Système d'un réseau de câbles aériens selon la revendication 12 comprenant en outre au moins une alimentation électrique apte à fournir un signal électrique parmi les suivants :
- un signal électrique généré fourni par le générateur ;
- un signal électrique fourni par l'accumulateur.

14. Procédé de gestion d'un signal électrique mis en œuvre par un système selon l'une quelconque des revendications 7 à 13 comprenant :
- la génération d'un signal électrique sous l'action d'un déplacement dudit au moins un premier contrepoids dans le poteau creux causé par une variation de la tension mécanique dudit premier câble.
